# EUROPÄISCHE PATENTSCHRIFT

(11) **EP 2 524 008 B1**
(45) Veröffentlichungstag und Bekanntmachung des Hinweises auf die Patenterteilung: **14.06.2017**
(21) Anmeldenummer: 10798512.9
(22) Anmeldetag: 17.12.2010
(51) Int. Cl.: C09C 1/00, C09D 5/03, C09D 5/36, C09D 7/12, C09D 11/037, C08K 3/22, C09D 17/00, C08K 9/02

(54) **EFFEKTPIGMENTE**
EFFECT PIGMENTS
PIGMENTS À EFFETS

(30) Priorität: 15.01.2010 EP 10000338
(43) Veröffentlichungstag der Anmeldung: 21.11.2012
(73) Patentinhaber: Merck Patent GmbH, 64293 Darmstadt (DE)
(72) Erfinder: KNIESS, Helge, Bettina, 64380 Roßdorf (DE)
(86) Internationale Anmeldenummer: PCT/EP2010/007742
(87) Internationale Veröffentlichungsnummer: WO 2011/085780

(56) Entgegenhaltungen:
- EP-A1- 0 719 843
- DE-A1-102005 037 611
- US-A- 2 811 463
- US-A- 4 205 996
- US-A- 5 080 718
- US-A1- 2009 280 053

## Beschreibung

Die vorliegende Erfindung betrifft Effektpigmente mit einem Substrat, das eine Beschichtung umfassend ein komplexes Metalloxid mit Spinell-Struktur enthaltend Kupfer, Eisen und Mangan aufweist, sowie ein Verfahren zur Herstellung der Effektpigmente, die Verwendung der Effektpigmente in Farben, Lacken, Pulverlacken, Druckfarben, Kunststoffen, keramischen Materialien, Gläsern, in kosmetischen Formulierungen, zur Lasermarkierung und zur Herstellung von Pigmentpräparationen und Trockenpräparaten.

Glanz- oder Effektpigmente, wie sie z. B. aus DE 2522572 bekannt sind, werden in vielen Bereichen der Technik eingesetzt, insbesondere im Bereich der Autolacke, der dekorativen Beschichtung, im Kunststoff, in Farben, Druckfarben sowie in kosmetischen Formulierungen.

Effektpigmente mit dunkelgrauer Farbe sind z. B. aus WO 9319131, DE 19522267, EP 0735115 und EP 0601761 bekannt. Ein Nachteil dieser Pigmente ist jedoch, dass sie aufgrund des Gehaltes an reduziertem Titandioxid (Suboxid) stets etwas bläulich-grau gefärbt sind.

Weiterhin sind graue Effektpigmente bekannt, deren Färbung durch das Aufbringen von CuₓMn₃₋ₓO₄ (x = 1.4 oder 1.5) auf die Oberfläche eines mit Titandioxid beschichtetem plättchenförmigen Substrats erzeugt wird (EP 0719843). Auch diese Pigmente sind nicht neutral schwarz oder grau, sondern weisen stets eine bläuliche bis grünliche Färbung auf.

In US 2,811,463 wird die Herstellung eines schwarzen, substratfreien Pigmentes, bestehend aus Mangan-, Kupfer- und Eisenoxid als Cokalzinationsprodukt, beschrieben. Dieses Pigment weist allerdings keinerlei Glanz auf.

Schwarze Effektpigmente basieren in vielen Fällen auf Kohlenstoff. Derartige Pigmente sind bekannt aus DE 4227082 A1, DE 3636076 A1, DE 3617430 A1 und EP 0246523. Die Herstellung der schwarzen Glanzpigmente erfolgt entweder durch den Einsatz von Ruß, durch Zersetzungsprozesse von organischen Verbindungen oder durch temperaturabhängige Calcinierung von Kohlenwasserstoffen. Aus EP 1520883 sind schwarze glänzende Interferenzpigment mit einstellbarem Farbanteil, d. h. mit einem Gold-, Grün-, Rot- oder Blaustich, bekannt.

Die aus dem Stand der Technik bekannten schwarzen Pigmente haben den Nachteil, dass sie einen stumpfen Glanz und eine grau-schwarze bzw. braun-schwarze Farbe aufweisen bzw. Interferenzfarben zeigen, die sehr stark vom Betrachtungswinkel abhängig sind, was in der Mehrzahl der Anwendungen nicht erwünscht ist. Weiterhin sind diese Pigmente zum Teil sehr schwer herstellbar bzw. reproduzierbar.

Aufgabe der vorliegenden Erfindung ist es daher, ein glänzendes Effektpigment mit neutral-grauer oder neutral-grauer bis -schwarzer Körperfarbe herzustellen.

Überraschend wurden nun neue, farbneutrale glänzende Effektpigmente gefunden, die sich gleichzeitig durch ein hohes Deckvermögen und eine gute Verarbeitbarkeit auszeichnen, die keine oder keine ausgeprägte Goniochromatizität besitzen und die leicht herzustellen sind. Gegenstand der Erfindung ist daher ein Effektpigment mit einem Substrat, das eine Beschichtung umfassend ein komplexes Metalloxid enthaltend Kupfer, Eisen und Mangan aufweist, wobei das komplexe Metalloxid Spinell-Struktur aufweist.

Die erfindungswesentliche Beschichtung umfasst komplexe Metalloxide aus einphasigen Mischkristallen von Kupfer-, Eisen- und Manganoxid, wobei das komplexe Metalloxid Spinell-Struktur aufweist. In der Spinell-Struktur besetzen mindestens zwei verschiedene Arten von Kationen (zweiwertige und drei- bzw. vierwertige Kationen) verschiedene Arten von Gitterplätzen, nämlich pro Elementarzelle acht tetraedrisch koordinierte Punktlagen und 16 oktaedrisch koordinierte Punktlagen. Bei den normalen Spinellen befinden sich alle 16 drei- bzw. vierwertigen Kationen auf den oktaedrischen Gitterplätzen, bei den inversen Spinellen sind je acht drei- bzw. vierwertigen Kationen und acht zweiwertige Kationen oktoedrisch koordiniert. Aufgrund gewisser Freiheitsgrade weisen die Kationen-Verteilungen in Spinellen oft Ordnungs-/Unordnungszustände auf.

Eisen und Mangan können im komplexen Metalloxid sowohl zweiwertig als auch dreiwertig vorliegen. Das komplexe Metalloxid kann zusätzlich weitere drei- und/oder zweiwertige Kationen enthalten, bevorzugt Aluminum-, Kobalt-, -und/oder Titankationen. Bevorzugte Mengen Aluminum-, Kobalt- und/oder Titanoxid sind hierbei 0 - 10 Gew.-% bezogen auf das komplexe Metalloxid.

Bevorzugt entspricht das komplexe Metalloxid der Formel CuₓFe_{y}Mn_{3-x-y}O₄ mit x = 1 - 1.4 und y = 0.1 - 1. Besonders bevorzugt handelt es sich bei den komplexen Metalloxiden um stöchiometrische Spinelle. Insbesondere bevorzugt ist ein Kupferspinell der Form Cu(Fe,Mn)₂O₄.

Die Menge des komplexen Metalloxids beträgt 2.5 - 60 Gew.-%, bevorzugt 20 - 60 Gew.-%, insbesondere 20 - 50 Gew.-%, bezogen auf das Substrat. In einer bevorzugten Variante kann die erfindungswesentliche Beschichtung zusätzlich zum komplexen Metalloxid teilweise Titandioxid enthalten. Die Dicke der erfindungswesentlichen ein komplexes Metalloxid enthaltenden Beschichtung beträgt vorzugsweise 1 bis 350 nm, insbesondere 10 nm bis 300 nm und ganz besonders bevorzugt 20 bis 200 nm.

Geeignete Substrate für die erfindungsgemäßen Effektpigmente sind z. B. alle bekannten plättchenförmige Trägermaterialien, vorzugsweise transparente oder semitransparente Plättchen. Bevorzugt sind solche plättchenförmigen Trägermaterialien, die mit einer oder mehrerer hoch-oder niedrigbrechenden, transparenten oder semitransparenten Metalloxidschichten beschichtet sind. Titandioxidbeschichteter Glimmer ist insbesondere bevorzugt.

Geeignete Trägermaterialien sind z. B. Schichtsilikate, insbesondere synthetischer oder natürlicher Glimmer, Glasplättchen, Metallplättchen, SiOₓ-Plättchen (x = ≤ 2,0, vorzugsweise ist x = 2), Al₂O₃-Plättchen, TiO₂-Plättchen, synthetische oder natürliche Eisenoxidplättchen, Graphitplättchen, strukturierte Pigmente, synthetische trägerfreie Plättchen, Liquid Crystal Polymers (LCPs), holographische Pigmente, BiOCI-Plättchen oder Gemische der genannten Plättchen. Bevorzugt sind Plättchen aus synthetischen oder natürlichen Glimmer, Glasplättchen, SiO₂-Plättchen und Al₂O₃-Plättchen, insbesondere Glimmerplättchen.

In der Regel haben die plättchenförmigen Trägermaterialien eine Dicke zwischen 0,05 und 5 µm, insbesondere zwischen 0,1 und 4,5 µm. Glasplättchen haben vorzugsweise eine Dicke von ≤ 1 µm, insbesondere von ≤ 900 nm und ganz besonders bevorzugt von ≤ 500 nm. Die Größe der Trägermaterialien ist an sich nicht kritisch und kann auf den jeweiligen Anwendungszweck abgestimmt werden. Üblicherweise beträgt die Partikelgröße 1 - 350 µm, vorzugsweise 2 - 200 µm, und insbesondere zwischen 5 - 150 µm. In der Regel können sowohl grobe Plättchen mit Partikelgrößen von 10 - 200 µm, vorzugsweise von 40 - 200 µm, insbesondere von 10 - 130 µm, als auch feinen Plättchen mit Partikelgrößen von 1 - 60 µm, vorzugsweise von 5 - 60 µm, insbesondere von 10 - 40 µm, verwendet werden. Bevorzugt können auch Gemische bestehen aus Plättchen mit unterschiedlichen Partikelgrößen eingesetzt werden.

Die Partikelgrößen werden mit dem Fachmann bekannten und handelsüblichen Geräten (z. B. von der Fa. Malvern, Fa. Horiba) mittels Laserbeugung am Pulver oder an Pigmentsuspensionen bestimmt. Die Substrate besitzen vorzugsweise einen Formfaktor (aspect ratio: Durchmesser / Dicke-Verhältnis) von 5 - 750, insbesondere von 10 - 300 und ganz besonders bevorzugt von 20 - 200. Darüber hinaus ist auch die Verwendung anderer Substrate, wie z. B. sphärischer Partikel oder nadelförmiger Substrate, die mit den oben genannten Schichten belegt sein können, möglich.

In einer bevorzugten Ausführungsform kann das Trägermaterial mit einer oder mehreren transparenten, semitransparenten und/oder opaken Schichten enthaltend Metalloxide, Metalloxidhydrate, Metallsuboxide, Metalle, Metallfluoride, Metallnitride, Metalloxynitride oder Mischungen dieser Materialien beschichtet sein. Die Metalloxid-, Metalloxidhydrat-, Metallsuboxid-, Metall-, Metallfluorid-, Metallnitrid-, Metalloxynitridschichten oder die Mischungen hieraus können niedrig- (Brechzahl < 1.8) oder hochbrechend (Brechzahl ≥ 1.8, bevorzugt von ≥ 2,0.) sein. Als Metalloxide und Metalloxidhydrate eignen sich alle dem Fachmann bekannten Metalloxide oder Metalloxidhydrate, wie z. B. Aluminiumoxid, Aluminiumoxidhydrat, Siliziumoxid, Siliziumoxidhydrat, Eisenoxid, Zinnoxid, Ceroxid, Zinkoxid, Zirkoniumoxid, Chromoxid, Titanoxid, insbesondere Titandioxid, in der Rutil- oder Anatas-Modifikation, Titanoxidhydrat sowie Mischungen hieraus, wie z.B. Ilmenit oder Pseudobrookit. Als Metallsuboxide können beispielsweise die Titansuboxide eingesetzt werden. Als Metalle eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxid-, Metall-, Metallfluorid und/oder Metalloxidhydratschichten und ganz besonders bevorzugt Metalloxid- und/oder Metalloxidhydratschichten auf den Träger aufgebracht. Insbesondere bevorzugt sind Oxide und/oder Oxidhydrate des Aluminiums, Siliziums, Eisens, Zinns und Titans, insbesondere Titandioxid, in der Rutil- oder Anatas-Modifikation, und Gemischen dieser Verbindungen. Weiterhin können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten abwechseln. Insbesondere bevorzugt sind Schichtpakete aus einer hoch- und einer niedrigbrechenden Schicht, wobei auf dem Träger eines oder mehrere dieser Schichtpakete aufgebracht sein können. Die Reihenfolge der hoch- und niedrigbrechenden Schichten kann dabei an den Träger angepasst werden, um den Träger in den Mehrschichtaufbau mit einzubeziehen.

Geeignete Substrate sind insbesondere solche plättchenförmigen Trägermaterialien, die mit einer oder mehrerer hoch- oder niedrigbrechenden, transparenten oder semitransparenten Metalloxidschichten beschichtet sind. Bevorzugt sind mit ein oder mehreren Metalloxidschichten beschichtete Träger. Besonders bevorzugt ist titandioxidbeschichteter Glimmer bzw. mit TiO₂/SnO₂ einfach oder mehrfach beschichteter Glimmer.

Die Schichten aus Metalloxiden, -hydroxid und/oder -oxidhydraten werden vorzugsweise nasschemisch aufgebracht. Derartige Verfahren sind dem Fachmann bekannten und z.B. in DE 25 22 572. Beispiele und Ausführungsformen der oben genannten Materialien und Pigmentaufbauten finden sich z.B. auch in den Research Disclosures RD 471001 und RD 472005. Bei der Nassbeschichtung wird das Substrat in Wasser suspendiert und mit einem oder mehreren hydrolysierbaren Metallsalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base oder Säure konstant gehalten. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden. Weiterhin kann die Beschichtung auch in einem Wirbelbettreaktor durch Gasphasenbeschichtung erfolgen.

Die Beschichtungen auf dem Trägermaterial bestehen bevorzugt aus einfachen oder komplexen Metalloxiden, Metallen, Nitriden oder Oxynitriden wie beispielsweise TiO₂, ZrO₂, ZnO, SnO₂, SiO₂, SiO(OH)₂, Al₂O₃, AlO(OH), B₂O₃ oder deren Gemische oder auch BiOCl oder auch MgF₂. Besonders bevorzugt ist TiO₂.

Die Dicke der Metalloxid-, Metalloxidhydrat-, Metallsuboxid-, Metall-, Metallfluorid-, Metallnitrid-, Metalloxynitridschichten oder einer Mischung daraus beträgt üblicherweise 1 bis 1000 nm, bevorzugt 1 bis 800 nm, insbesondere 1 bis 600 nm. Besonders geeignet sind Schichtdicken von 1 bis 300 nm, insbesondere von 1 bis 100 nm. Die Dicke der Metallschichten beträgt vorzugsweise 4 bis 60 nm.

Die erfindungswesentliche ein komplexes Metalloxid enthaltende Beschichtung kann als äußere Oxidbeschichtung vorhanden sein oder mit mit einer oder mehrerer hoch- oder niedrigbrechenden, transparenten oder semitransparenten Metalloxidschichten, bevorzugt mit einer TiO₂-Schicht, beschichtet sein. Bevorzugt ist die ein komplexes Metalloxid enthaltende Beschichtung außen.

Die erfindungswesentliche ein komplexes Metalloxid enthaltende Beschichtung wird dadurch hergestellt, dass das komplexe Metalloxid auf einem Substrat dadurch gebildet wird, dass eine wässrige Suspension des Substrats mit wasserlöslichen Kupfer-, Eisen- und Mangansalzen so versetzt wird, dass die wasserhaltigen Oxide auf dem Substrat, ggf. teilweise mit der Titandioxidschicht vermischt, erzeugt werden, wobei die wasserlöslichen Kupfer-, Eisen- und Mangansalze gleichzeitig oder nacheinander zudosiert werden können.

Vorzugsweise wird zuerst die Mangansalzlösung, ggf. gleichzeitig mit der Titansalzlösung, zugegeben und dann die Kupfersalzlösung und anschließende die Eisensalzlösung zudosiert. Geeignete Metallsalze sind insbesondere Halogenide, Nitrate und Sulfate, insbesondere Chloride und Sulfate. Die Fällung der Metalloxide wird durch geeignete pH- und Temperaturbedingungen erreicht. Die für eine gewünschte Pigmentzusammensetzung erforderlichen einzusetzenden Mengen und Konzentrationen kann der Fachmann routinemäßig bestimmen.

Die Effektpigmente der Erfindung können auch über der ein komplexes Metalloxid umfassenden Beschichtung ein oder mehrere Schichten aus hoch- und/oder niedrigbrechenden, transparenten oder semitransparenten Metallverbindungen, insbesondere aus TiO₂, ZrO₂, ZnO, SnO₂, SiO₂, SiO(OH)₂, Al₂O₃, AlO(OH), B₂O₃ oder deren Gemische, aufweisen.

Das nach dem beschriebenen Verfahren hergestellte Pigment wird abgetrennt, gewaschen, bei bevorzugt 80 - 150°C getrocknet und bei 400 - 850°C, bevorzugt 500 - 700°C, 30 - 60 Minuten lang unter Luft calciniert, wodurch das komplexe Metalloxid gebildet wird.

Ein weiteres Verfahren zur Herstellung von Effektpigmenten mit einer erfindungsgemäßen ein komplexes Metalloxid enthaltenden Beschichtung umfasst das Kalzinieren einer Mischung aus a) TiO₂/CuO-beschichtetem Glimmer, b) TiO₂/FeO-beschichtetem Glimmer und c) TiO₂/MnObeschichtetem Glimmer. Die beschichteten Glimmer werden nach den im Vorangegangenen beschriebenen Verfahren getrennt beschichtet, gewaschen und getrocknet. Dann wird die Mischung hergestellt und die so beschichteten Glimmer gemeinsam bei 400 - 850°C, bevorzugt 500 - 700°C, 30 - 60 Minuten lang unter Luft calciniert, wodurch das komplexe Metalloxid gebildet wird.

Zur Erhöhung der Licht-, Wasser- und Wetterstabilität empfiehlt es sich häufig, in Abhängigkeit vom Einsatzgebiet, das fertige Pigment einer Nachbeschichtung oder Nachbehandlung zu unterziehen. Als Nachbeschichtungen bzw. Nachbehandlungen kommen alle dem Fachmann bekannten Nachbeschichtungen in Frage. Durch diese Nachbeschichtung wird die chemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendermedien können weitere übliche funktionelle Beschichtungen, z.B. mit Silanen, aufgebracht werden.

Insbesondere bevorzugt ist ein Effektpigment bestehend aus, in dieser Reihenfolge, einem Glimmersubstrat, ggf einer Zinndioxidbeschichtung, einer Titandioxidbeschichtung, einer Beschichtung aus einem komplexen Metalloxid mit Spinell-Struktur der Form Cu(Fe,Mn)₂O₄, wobei die Titandioxidbeschichtung und die ein komplexes Metalloxid enthaltende Beschichtung teilweise oder ganz, bevorzugt teilweise, vermischt sein können, und ggf. einer Nachbeschichtung.

Für die verschiedenen Anwendungszwecke können die erfindungsgemäßen Effektpigmente auch vorteilhaft in Abmischung mit Füllstoffen, organischen Farbstoffen und/oder Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers), Interferenzpigmenten und herkömmlichen transparenten, bunten und schwarzen Glanzpigmenten auf der Basis von metalloxidbeschichteten Plättchen auf Basis von Glimmer, Glas, Al₂O₃, Fe₂O₃, SiO₂, etc., verwendet werden. Die erfindungsgemäßen Effektpigmente können in jedem Verhältnis mit handelsüblichen Pigmenten und Füllern gemischt werden.

Als Füllstoffe sind z.B. zu nennen natürlicher und synthetischer Glimmer, Nylon Powder, reine oder gefüllte Melaninharze, Talcum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe. Bezüglich der Partikelform des Füllstoffes gibt es keine Einschränkungen. Sie kann den Anforderungen gemäß z.B. plättchenförmig, sphärisch oder nadelförmig sein.

Die erfindungsgemäßen Effektpigmente können in Lacken (Auto- und Industrielacke, lösemittel- und wasserbasierend, Pulverlacke), Kunststoffen, Druckfarben, keramischen Glasuren oder kosmetischen Formulierungen angewandt werden.
Auch können sie in Form von Präparationen (Pearlets, Pasten, Anteigungen) z.B. für den Einsatz in Druckfarben oder Kunststoffen genutzt werden.

Die erfindungsgemäßen Effektpigmente sind weiterhin geeignet zur Herstellung von fließfähigen Pigmentpräparationen und Trockenpräparaten enthaltend ein oder mehrere erfindungsgemäße Effektpigmente, Bindemittel und optional ein oder mehrere Additive. Unter Trockenpräparaten sind auch Präparate zu verstehen, die 0 bis 8 Gew.%, vorzugsweise 2 bis 8 Gew.%, insbesondere 3 bis 6 Gew.%, an Wasser und/oder eines Lösemittels oder Lösemittelgemisches enthalten. Die Trockenpräparate liegen vorzugsweise als Pellets, Granulate, Chips, Würstchen oder Briketts vor und weisen Teilchengrößen von 0,2-80 mm auf. Die Trockenpräparate finden insbesondere Anwendung bei der Herstellung von Druckfarben und in kosmetischen Formulierungen.

Die erfindungsgemäßen Effektpigmente sind mit einer Vielzahl von Farbsystemen kompatibel vorzugsweise aus dem Bereich der Lacke, Farben und Druckfarben. Für die Herstellung der Druckfarben ist eine Vielzahl von Bindern, insbesondere wasserlösliche Typen, geeignet, wie sie z.B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen, sowie für Anwendungen im Agrarbereich, z.B. für Gewächshausfolien, sowie z. B. für die Farbgebung von Zeltplanen, geeignet.

Gegenstand der Erfindung ist weiterhin auch die Verwendung der Effektpigmente in Formulierungen wie Farben, Druckfarben, Sicherheitsdruckfarben, Lacken, Pulverlacken, Kunststoffen, keramischen Materialien, Gläsern, in kosmetischen Formulierungen, als Dotierstoff für die Lasermarkierung von Papieren und Kunststoffen sowie zur Herstellung von Pigmentpräparationen und Trockenpräparaten.

Die Offenbarungen in den zitierten Literaturstellen gehören hiermit ausdrücklich auch zum Offenbarungsgehalt der vorliegenden Anmeldung. Die folgenden Beispiele erläutern die vorliegende Erfindung näher, ohne den Schutzbereich zu beschränken.

### Beispiele

### Beispiel 1

Herstellung eines glänzenden, semitransparenten Effektpigmentes mit dunkelgrauer Körperfarbe und mit der Zusammensetzung Glimmer, Zinndioxid, Titandioxid, Cu(Fe,Mn)₂O₄:
100 g Glimmer der Teilchengröße 10 -60 µm werden in 1,5 I entmineralisiertem Wasser unter Rühren auf 75 °C erhitzt. Nun wird mit einer 5 %igen Salzsäure der pH-Wert der Suspension auf 1,8 eingestellt. Es folgt das Zudosieren einer Zinntetrachloridlösung (aus 4,5 g einer 50%igen SnCl₄ -Lösung und 12 g konzentrierter Salzsäure in 50 g voll entsalztem Wasser), wobei der pH Wert durch gleichzeitiges Zutropfen einer 20 %igen Natronlauge konstant gehalten wird. Nach vollständiger Zugabe wird 15 min. nachgerührt. Es folgt das Zudosieren einer Titantetrachlorid-/ Mangandichloridlösung (34,8 g MnCl₂* 2 H₂O gelöst in 250 ml einer TiCl₄ -Lösung mit einem Gehalt von 340 g TiCl₄/l), wobei der pH Wert durch gleichzeitiges Zutropfen einer 32 %igen Natronlauge konstant gehalten wird. Nach vollständiger Zugabe wird 15 min. nachgerührt. Nun wird die Kupferchloridlösung (29 g CuCl₂*2 H₂O gelöst in 150 ml voll entsalztem Wasser) und anschließend die Eisensulfatlösung (36,8 g FeSO₄*7 H₂O gelöst in 100 ml voll entsalztem Wasser) zudosiert. Nach vollständiger Zugabe wird 15 min. nachgerührt. Anschließend wird der pH- Wert durch Zugabe von 20%iger Natronlauge langsam auf 9,8 gestellt und 30 min. nachgerührt. Das Produkt wird abfiltriert, gewaschen, getrocknet, bei 600-700 °C geglüht und durch ein 100 µm Sieb gesiebt. Man erhält ein silbrig glänzendes Pigment mit farbneutraler dunkelgrauer Körperfarbe und hohem Deckvermögen.
Anschließend werden vom Effektpigment nach Einarbeitung in Nitrocellulose-Lack Lackkarten angefertigt und diese koloristisch vermessen.
Chroma Schwarzkarte: 7,42
Chroma Weißkarte: 1,58

### Vergleichsbeispiel

Herstellung eines glänzenden, semitransparenten Effektpigmentes mit dunkelgrauer Körperfarbe und mit der Zusammensetzung Glimmer, Zinndioxid, Titandioxid, CuₓMn₃₋ₓO₄ gemäß EP 0719843 mit x = 1.4:
100 g Glimmer der Teilchengröße 10 -60 µm werden in 1,5 I entmineralisiertem Wasser unter Rühren auf 75 °C erhitzt. Nun wird mit einer 5 %igen Salzsäure der pH-Wert der Suspension auf 1,8 eingestellt. Es folgt das Zudosieren einer Zinntetrachloridlösung (aus 4,5 g einer 50%igen SnCl₄ -Lösung und 12 g konzentrierter Salzsäure in 50 g voll entsalztem Wasser), wobei der pH Wert durch gleichzeitiges Zutropfen einer 20 %igen Natronlauge konstant gehalten wird. Nach vollständiger Zugabe wird 15 min. nachgerührt. Es folgt das Zudosieren einer Titantetrachlorid-/ Mangandichloridlösung (34,8 g MnCl₂* 2 H₂O gelöst in 250 ml einer TiCl₄ -Lösung mit einem Gehalt von 340 g TiCl₄/l), wobei der pH Wert durch gleichzeitiges Zutropfen einer 32 %igen Natronlauge konstant gehalten wird. Nach vollständiger Zugabe wird 15 min. nachgerührt. Nun wird die Kupferchloridlösung (30,0 g CuCl₂*2 H₂O gelöst in 150 ml voll entsalztem Wasser) zudosiert. Nach vollständiger Zugabe wird 15 min. nachgerührt. Anschließend wird der pH- Wert durch Zugabe von 20%iger Natronlauge langsam auf 9,8 gestellt und 30 min. nachgerührt. Das Produkt wird abfiltriert, gewaschen, getrocknet, bei 600-700 °C geglüht und durch ein 100 µm Sieb gesiebt.
Man erhält ein silbrig glänzendes Effektpigment mit blaugrauer Körperfarbe und hohem Deckvermögen.
Anschließend werden vom Pigment nach Einarbeitung in Nitrocellulose-Lack Lackkarten angefertigt und diese koloristisch vermessen.
Chroma Schwarzkarte: 13,30
Chroma Weißkarte: 1,81

## Patentansprüche

1. Effektpigment mit einem Substrat, das eine Beschichtung umfassend ein komplexes Metalloxid enthaltend Kupfer, Eisen und Mangan aufweist, wobei das komplexe Metalloxid Spinell-Struktur aufweist.

2. Effektpigment nach Anspruch 1, **dadurch gekennzeichnet, dass** die Menge des komplexen Metalloxids 2.5 - 60 Gew.-%, insbesondere 20 - 50 Gew.-%, bezogen auf das Substrat beträgt.

3. Effektpigment nach einem der Ansprüche 1 bis 2, **dadurch gekennzeichnet, dass** das komplexe Metalloxid der Formel CuₓFe_{y}Mn_{3-x-y}O₄ mit x = 1 - 1.4 und y = 0.1 - 1 entspricht.

4. Effektpigment nach einem der Ansprüche 1 bis 3, **dadurch gekennzeichnet, dass** das komplexe Metalloxid zusätzlich Aluminum-, Kobalt- und/oder Titankationen enthält.

5. Effektpigment nach einem der Ansprüche 1 bis 4, **dadurch gekennzeichnet, dass** das komplexe Metalloxid ein Kupferspinell der Form Cu(Fe,Mn)₂O₄ ist.

6. Effektpigment nach einem der Ansprüche 1 bis 5, **dadurch gekennzeichnet, dass** die Beschichtung teilweise Titandioxid enthält.

7. Effektpigment nach einem der Ansprüche 1 bis 6, **dadurch gekennzeichnet, dass** die Beschichtung eine Dicke von 1 bis 350 nm, bevorzugt 100 bis 250 nm, aufweist.

8. Effektpigment nach einem der Ansprüche 1 bis 7, **dadurch gekennzeichnet, dass** das Substrat plättchenförmig ist.

9. Effektpigment nach einem der Ansprüche 1 bis 8, **dadurch gekennzeichnet, dass** das Substrat natürlicher oder synthetischer Glimmer, BiOCI-Plättchen, Glasplättchen, Fe₂O₃-Plättchen, Graphitplättchen, Al₂O₃-Plättchen, SiO₂-Plättchen oder TiO₂-Plättchen oder Mischungen dieser Plättchen, insbesondere natürlicher oder synthetischer Glimmer, ist.

10. Effektpigment nach einem der Ansprüche 1 bis 9, **dadurch gekennzeichnet, dass** das Substrat unter oder über der ein komplexes Metalloxid umfassenden Beschichtung ein oder mehrere Schichten aus hoch- und/oder niedrigbrechenden, transparenten oder semitransparenten Metallverbindungen aufweist.

11. Effektpigment nach Anspruch 10, **dadurch gekennzeichnet, dass** die Metallverbindungen ausgewählt sind aus TiO₂, ZrO₂, ZnO, SnO₂, SiO₂, SiO(OH)₂, Al₂O₃, AIO(OH), B₂O₃ und deren Gemische.

12. Effektpigment nach einem der Ansprüche 1 bis 11, **dadurch gekennzeichnet, dass** es eine anorganische oder organische Nachbeschichtung aufweist.

13. Verfahren zur Herstellung der Effektpigmente nach einem der Ansprüche 1 bis 12, **dadurch gekennzeichnet, dass** die Beschichtung der plättchenförmigen Substrate nasschemisch, durch CVD- oder PVD-Verfahren erfolgt.

14. Verwendung der Effektpigmente nach einem der Ansprüche 1 bis 13 in Farben, Lacken, Pulverlacken, Druckfarben, Kunststoffen, keramischen Materialien, Gläsern, in kosmetischen Formulierungen, zur Lasermarkierung und zur Herstellung von Pigmentpräparationen und Trockenpräparaten.

## Claims

1. Effect pigment having a substrate which has a coating comprising a complex metal oxide containing copper, iron and manganese, where the complex metal oxide has a spinel structure.

2. Effect pigment according to Claim 1, **characterised in that** the amount of the complex metal oxide is 2.5 - 60% by weight, in particular 20 - 50% by weight, based on the substrate.

3. Effect pigment according to one of Claims 1 to 2, **characterised in that** the complex metal oxide conforms to the formula CuₓFe_{y}Mn_{3-x-y}O₄, where x = 1 - 1.4 and y = 0.1 - 1.

4. Effect pigment according to one of Claims 1 to 3, **characterised in that** the complex metal oxide additionally contains aluminium cations, cobalt cations and/or titanium cations.

5. Effect pigment according to one of Claims 1 to 4, **characterised in that** the complex metal oxide is a copper spinel of the form Cu(Fe, Mn)₂O₄.

6. Effect pigment according to one of Claims 1 to 5, **characterised in that** the coating partly comprises titanium dioxide.

7. Effect pigment according to one of Claims 1 to 6, **characterised in that** the coating has a thickness of 1 to 350 nm, preferably 100 to 250 nm.

8. Effect pigment according to one of Claims 1 to 7, **characterised in that** the substrate is in flake form.

9. Effect pigment according to one of Claims 1 to 8, **characterised in that** the substrate is natural or synthetic mica, BiOCl flakes, glass flakes, Fe₂O₃ flakes, graphite flakes, Al₂O₃ flakes, SiO₂ flakes or TiO₂ flakes or mixtures of these flakes, in particular natural or synthetic mica.

10. Effect pigment according to one of Claims 1 to 9, **characterised in that** the substrate has one or more layers comprising high- and/or low-refractive-index, transparent or semitransparent metal compounds beneath or above the coating comprising a complex metal oxide.

11. Effect pigment according to Claim 10, **characterised in that** the metal compounds are selected from TiO₂, ZrO₂, ZnO, SnO₂, SiO₂, SiO(OH)₂, Al₂O₃, AlO(OH), B₂O₃ and mixtures thereof.

12. Effect pigment according to one of Claims 1 to 11, **characterised in that** it has an inorganic or organic post-coating.

13. Process for the preparation of the effect pigments according to one of Claims 1 to 12, **characterised in that** the coating of the flake-form substrates is carried out by wet-chemical methods, by CVD methods or PVD methods.

14. Use of the effect pigments according to one of Claims 1 to 13 in paints, coatings, powder coatings, printing inks, plastics, ceramic materials, glasses, in cosmetic formulations, for laser marking and for the preparation of pigment preparations and dry preparations.

## Revendications

1. Pigment d'effet comportant un substrat qui comporte un revêtement qui comprend un oxyde métallique complexe qui contient du cuivre, du fer et du manganèse, dans lequel l'oxyde métallique complexe présente une structure spinelle.

2. Pigment d'effet selon la revendication 1, **caractérisé en ce que** la quantité de l'oxyde métallique complexe est de 2,5 - 60% en poids, en particulier de 20 - 50% en poids, sur la base du substrat.

3. Pigment d'effet selon l'une des revendications 1 et 2, **caractérisé en ce que** l'oxyde métallique complexe est conforme à la formule CuₓFe_{y}Mn_{3-x-y}O₄, dans laquelle x = 1 - 1,4 et y = 0,1 - 1.

4. Pigment d'effet selon l'une des revendications 1 à 3, **caractérisé en ce que** l'oxyde métallique complexe contient des cations d'aluminium, des cations de cobalt et/ou des cations de titane.

5. Pigment d'effet selon l'une des revendications 1 à 4, **caractérisé en ce que** l'oxyde métallique complexe est un spinelle de cuivre de la forme Cu(Fe,Mn)₂O₄.

6. Pigment d'effet selon l'une des revendications 1 à 5, **caractérisé en ce que** le revêtement comprend en partie du dioxyde de titane.

7. Pigment d'effet selon l'une des revendications 1 à 6, caractérisé en en ce que le revêtement présente une épaisseur de 1 à 350 nm, de façon préférable de 100 à 250 nm.

8. Pigment d'effet selon l'une des revendications 1 à 7, **caractérisé en ce que** le substrat est sous forme de flocons.

9. Pigment d'effet selon l'une des revendications 1 à 8, **caractérisé en ce que** le substrat est du mica naturel ou synthétique, des flocons de BiOCl, des flocons de verre, des flocons de Fe₂O₃, des flocons de graphite, des flocons d'Al₂O₃, des flocons de SiO₂ ou des flocons de TiO₂ ou des mélanges de ces flocons, en particulier du mica naturel ou synthétique.

10. Pigment d'effet selon l'une des revendications 1 à 9, **caractérisé en ce que** le substrat comporte une ou plusieurs couche(s) comprenant des composés métalliques à indice de réfraction élevé et/ou faible, transparents ou semi-transparents au-dessous ou au-dessus du revêtement qui comprend un oxyde métallique complexe.

11. Pigment d'effet selon la revendication 10, **caractérisé en ce que** les composés métalliques sont choisis parmi TiO₂, ZrO₂, ZnO, SnO₂, SiO₂, SiO(OH)₂, Al₂O₃, AlO(OH), B₂O₃ et des mélanges de ceux-ci.

12. Pigment d'effet selon l'une des revendications 1 à 11, **caractérisé en ce qu'**il comporte un post-revêtement inorganique ou organique.

13. Procédé pour la préparation des pigments d'effet selon l'une des revendications 1 à 12, **caractérisé en ce que** le revêtement des substrats sous forme de flocons est mis en oeuvre au moyen de procédés chimiques par voie humide, au moyen de procédés CVD (dépôt chimique en phase vapeur) ou au moyen de procédés PVD (dépôt physique en phase vapeur).

14. Utilisation des pigments d'effet selon l'une des revendications 1 à 13 dans des peintures, des revêtements, des revêtements pulvérulents, des encres d'impression, des matières plastiques, des matériaux de céramique, des verres, dans des formulations cosmétiques, pour le marquage au laser et pour la préparation de préparations de pigments et de préparations sèches.
